# EUROPEAN PATENT APPLICATION

(11) **EP 4 790 597 A1**
(43) Date of publication of application: **12.08.2026**
(21) Application number: 26154158.5
(22) Date of filing: 26.01.2026
(51) Int. Cl.: G06N 10/00

(54) **METHOD FOR MEASURING AN OBSERVABLE ON A QUANTUM COMPUTING DEVICE**

(30) Priority: 05.02.2025 US 202563754253 P
(71) Applicant: QEDMA Quantum Computing LTD, 6902068 Tel Aviv (IL)
(72) Inventor: ARAD, Itai, 129791 KENT VALE (SG); AHARONOV, Dorit, 9234517 JERUSALEM (IL); ALBERTON, Ori, 6226707 TEL-AVIV (IL); GOLAN, Omri, 7630015 REHOVOT (IL); LINDNER, Netanel Hanan, 3783500 AVIEL (IL); SHUTMAN, Maor, 6203612 TEL-AVIV (IL)
(74) Representative: Lavoix

(57) **Abstract**

It is provided a method for measuring on a quantum computing device an expectation value of an observable in a given quantum state. The method comprises (a) obtaining an efficient tensor network representation T of the observable in the Pauli basis; (b) extracting from the observable a sum of one or more directly measurable operators, each directly measurable operator being: i) such that after applying a local qubit rotation at each qubit site, said directly measurable operator is diagonal in a Z basis, and ii) represented by an efficient tensor network; (c) for each directly measurable operator, applying said local qubit rotations on the qubits of the quantum device and measuring said qubits in a computational basis to compute expectation values corresponding to each of said directly measurable operators; (d) combining the expectation values of said directly measurable operators to compute an approximation of the expectation value of the observable.

## Description

### TECHNOLOGICAL FIELD

The present disclosure relates to quantum computing devices and methods for measuring quantum observables. More particularly, it concerns techniques for decomposing complex quantum operators, represented (encoded) in a tensor-network form, into directly measurable operators that can be measured with conventional hardware using computational-basis measurements.

### BACKGROUND

An ingredient of many quantum algorithms, in particular variational quantum algorithms such as the VQE algorithm, is the estimation of the expectation value of a quantum observable (or set of quantum observables) for a quantum state. Physically, this is done using quantum measurements. Theoretically, every observable defines a quantum measurement by its spectral decomposition, which can be used to estimate the expectation value. Practically, however, quantum computers are typically restricted to a special type of measurement: every qubit can be measured independently in the computational basis {|0〉, |1〉}. One therefore needs to devise a protocol to measure a given observable: an algorithm that will accept as its input many copies of a quantum state, apply certain quantum circuits on them, followed by a set of computational basis measurements, which will then be post-processed to yield an approximation for the expectation value.

When the number of observables we wish to measure is small, and each observable has simple structure (e.g., it is defined on a small number of qubits, or it is a product operator), such measurement protocols are easy to construct. However, in numerous situations, this is not the case. For example, in a VQE simulation of quantum chemistry, the target Hamiltonian is often a highly non-local operator. Another example are certain error-mitigation frameworks, which rely on the measurement of highly non-local observables. In such cases, there might be large variations between the overheads of different measurement protocols.

Over the years, several measurement protocols have been suggested. One intuitive approach is to start by expanding an observable O in terms of Pauli operators, *O* = *Σ_{α} O_{α}P_{α}* where O_{α} are some real number coefficients. The goal is then to estimate the expectation value of these Paulis since by linearity 〈*O*〉 = Σ*_{α} O_{α}*〈*P_{α}*〉*.* To that aim, one tries to partition the set of Paulis into subsets of mutually commuting operators, since mutually commuting observables can be measured in parallel. This approach was used with the goal of finding as few as possible such sets.

As the problem of an efficient measurement protocol to a set of observables is closely related to the problem of quantum tomography, several works have used tomographic techniques to solve this problem. These approaches are particularly useful when one is interested in estimating the expectation values of a large set of observables. One such technique is shadow tomography. There, one applies a random unitary matrix on the state before measuring it in the standard basis, and then uses the statistics of the measurements, together with the inversion of the random unitary channel to estimate expectation values in that state.

Another tomographic set of techniques revolves around informationally over complete measurements and their dual measurement frames. Here, given an informationally overcomplete measurement, there exists an infinite number of ways in which one can use the measurement statistics to reconstruct the expectation value of a given observable. These different ways are associated with the so-called dual measurement frames of the overcomplete measurement. A common theme in these works is to find a dual measurement frame with a low variance, which will lead to a low statistical error.

In a recent work, the dual measurement frames approach was generalized to observables that are described by tensor-networks, such as matrix-product-operators (MPOs). In such cases, the problem can be scaled up to cope with observables and informationally overcomplete measurements that are defined over many qubits.

### GENERAL DESCRIPTION

In the current era of NISQ devices, the number of measurements that can be performed is limited. Consequently, there is a need to devise a protocol that uses a small number of measurements, where each measurement uses few quantum operators (such as single qubit measurements and unitary gates).

Herein, we provide an approach for constructing a measurement scheme. The observable is assumed to have an efficient tensor-network description. The present disclosure provides a greedy algorithm that depends on the observable itself and outputs a set of measurement bases. The expectation value of the observable can then be calculated from the statistics of the measurement results in these bases.

The present disclosure provides a computer implemented method for measuring on a quantum computing device an expectation value of an observable in a given quantum state. The method comprises (a) obtaining an efficient tensor network representation T of the observable in the Pauli basis; (b) extracting from the observable a sum of one or more directly measurable operators, each directly measurable operator being: i) such that after applying a local qubit rotation at each qubit site, said directly measurable operator is diagonal in a computational (Z) basis, and ii) represented by an efficient tensor network; (c) for each directly measurable operator, applying said local qubit rotations on the qubits of the quantum device and measuring said qubits in the computational basis to compute expectation values corresponding to each of said directly measurable operators; (d) combining the expectation values of said directly measurable operators to compute an approximation of the expectation value of the observable.

In addition to the above features, a computer implemented method for measuring on a quantum computing device an expectation value of an observable in a given quantum state, according to the present disclosure can optionally comprise one or more features (i) to (xx) below, in any technically possible combination:
(i) the one or more directly measurable operators are extracted iteratively by an iterative deterministic process using the tensor network representation *T* of the observable;
(ii) said iterative deterministic process uses a greedy approach configured to maximize an operator norm of said one or more directly measurable operators at each step of said iterative deterministic process;
(iii) the step of extracting from the observable a sum of one or more directly measurable operators comprises obtaining a tensor network representation *T⁽¹⁾* of a first directly measurable operator by an iterative process comprising sequentially processing each qubit *i* from *1* to *n* by contracting an intermediate tensor network *T*_{*i-*1} with a projector *Qᵢ* along the i-th leg of the tensor network *T*_{*i*-1} to form a subsequent intermediate tensor network *Tᵢ* such that a L₂ norm of said subsequent intermediate tensor network *Tᵢ* is maximal, wherein *T₀= T* and *Tₙ* is the tensor network representation *T⁽¹⁾* of the first directly measurable operator;
(iv) the projector *Qᵢ* is expressed as ${Q}_{i} = {R}_{i}^{- 1} \hat{Q} {R}_{i}$, where Q is a fixed rank-2 projector onto the Pauli coordinates {0, 3} corresponding to the identity and Z operators and the local rotation *Rᵢ* is a 4x4 orthogonal matrix on the Pauli coordinates such that the L₂ norm of the subsequent intermediate tensor network *Tᵢ* is maximal;
(v) said local rotation *Rᵢ* is computed from the intermediate tensor network *T*_{*i*-1} by:
   a. computing a local environment *E_{αβ}* of the i-th qubit,
   b. extracting a subspace local environment *Ê_{αβ}* from the local environment *E_{αβ}* corresponding to the Pauli X, Y, Z;
   c. computing a subspace rotation *R̂ᵢ* that diagonalizes the subspace local environment *Ê_{αβ}* and places a largest eigenvalue at the Pauli Z;
wherein the local rotation *Rᵢ* is a block-diagonal matrix incorporating *R̂ᵢ*;
(vi) the local environment *E_{αβ}* of the i-th qubit is computed as a 4x4 positive semi definite matrix defined by contracting the intermediate tensor network *T*_{*i*-1} with itself along all physical legs except for the i-th leg;
(vii) the subspace local environment *Ê_{αβ}* is extracted from the local environment *E_{αβ}* as a 3x3 submatrix corresponding to the Pauli X, Y, Z;
(viii) the local rotation *Rᵢ* is defined as a 4x4 orthogonal matrix such that: ${R}_{i} = \left(\begin{matrix}1 & 0 & 0 & 0 \\ 0 & & & \\ 0 & & {\hat{R}}_{i} & \\ 0 & & & \end{matrix}\right)$
(ix) tensor network representations T(k) of remaining directly measurable operators, for *k* ≥ 2 are computed iteratively by:
   (a) computing a residual tensor network Δ*Tₖ* substantially equal to a difference between a residual tensor network computed from a previous iteration Δ*T*_{*k*-1} and the tensor network representation *T*^{(*k-*1)} of the directly measurable operator determined in the previous iteration, wherein Δ*T*₁ *= T*;
   (b) obtaining *T*^{(*k*)} by performing an iterative process comprising sequentially processing each qubit *i* from *1* to *n* by contracting an intermediate tensor network *T*_{*i*-1} with a projector *Qᵢ* along the i-th leg of the tensor network *T*_{*i-*1} to form a subsequent intermediate tensor network *Tᵢ* such that a L₂ norm of said subsequent intermediate tensor network *Tᵢ* is maximal, wherein *T₀ =* Δ*Tₖ* and *Tₙ* is the tensor network representation *T^{(k)}* of the k-th directly measurable operator;
wherein said tensor network representations *T^{(k)}* of said remaining directly measurable operators are computed until one or more predefined criteria is met;
(x) said predefined criteria includes k reaching a predefined maximum operator threshold. For example, said predefined criteria (e.g. the predefined maximum operator threshold) may be determined based on an available run time on the quantum computing device given to a user.
(xi) said predefined criteria includes a L₂ norm of one of the remaining directly measurable operators being smaller than a predefined norm threshold;
(xii) the tensor network representations *T^{(k)}* of the remaining directly measurable operators, for *k* ≥ 2 are computed iteratively using a backtracking approach.
(xiii) the backtracking approach comprises:
   a. storing backtracking data during the calculation of *T⁽¹⁾*, the backtracking data including, for each value of i ranging from 1 to n, the intermediate tensor network representation *T*_{*i*-1}, the corresponding local rotation matrix *Rᵢ* and the two eigenvalues of the corresponding subspace local environment *Ê_{αβ}*;
   b. selecting a qubit location j for which one of backtracked eigenvalue is maximal;
   c. sequentially processing each qubit *i* from *j* to *n* by contracting an intermediate tensor network *T*_{*i*-1} with a projector *Qᵢ* along the i-th leg of the tensor network *T*_{*i*-1} to form a subsequent intermediate tensor network *Tᵢ* such that a L₂ norm of said subsequent intermediate tensor network *Tᵢ* is maximal, wherein the projector *Qⱼ* is derived from a concatenation of the rotation *Rⱼ* and a rotation aligning the maximal backtracked eigenvalue to the Pauli Z axis and *Tₙ* is the tensor network representation *T⁽²⁾* of the second directly measurable operator;
   d. updating the backtracking data during the calculation of *T⁽²⁾*;
   e. iterating steps (b)-(d) until one or more predefined criteria is met;
(xiv) said predefined criteria includes k reaching a predefined maximum operator threshold;
(xv) said predefined criteria includes a L₂ norm of one of the remaining directly measurable operators being smaller than a predefined norm threshold;
(xvi) sequentially processing each qubit is performed in a greedy order;
(xvii) determining the greedy order includes computing for each remaining qubit a subspace local environment *Ê_{αβ}* and a maximum eigenvalue thereof and selecting the qubit location corresponding to the largest maximum eigenvalue among the computed maximum eigenvalues;
(xviii) the efficient tensor network is a Matrix Product State, a Tree Tensor Network or a Projected Entangled Pair States;
(xix) obtaining an efficient tensor network representation *T* of the observable in the Pauli basis includes receiving the efficient tensor network representation;
(xx) wherein obtaining an efficient tensor network representation *T* of the observable in the Pauli basis includes mapping the efficient tensor network representation from a list of Pauli strings.

The present disclosure also provides a computer implemented method for measuring on a quantum computing device an expectation value of an observable in a given quantum state, the method comprising:(a) obtaining an efficient tensor network representation *T* of the observable in the Pauli basis; (b) extracting from the observable a sum of one or more directly measurable operators wherein each directly measurable operator is diagonal in a fixed basis with a single quantum circuit; (c) for each directly measurable operator, applying said local qubit rotations on the qubits of the quantum device and measuring said qubits in a said fixed computational basis to compute expectation values corresponding to each of said directly measurable operators; (d) combining the expectation values of said directly measurable operators to compute an approximation of the expectation value of the observable.

The present disclosure also provides a hybrid classical-quantum computation with tensor network based backpropagation using any of the methods previously described.

The present disclosure also provides a quantum error mitigation scheme using any of the methods previously described.

The present disclosure also provides a computer system configured to implement any of the methods previously described.

In the present disclosure, the following terms and their derivatives can be understood in view of the below explanations:
An observable may refer to a Hermitian operator acting on the Hilbert space of a quantum system.

In the present disclosure, n denotes the total number of qubits in the system. We denote the Pauli operators by ${P}_{0} = I , {P}_{1} = X , {P}_{2} = Y , {P}_{3} = Z$

For a string *α* = (*α*₁*, α*₂*,* ..., *αₙ*)*,* where *αᵢ* ∈ {0, 1, 2, 3}, we denote ${P}_{{α}_{_}} = {P}_{{α}_{1}} ⊗ … ⊗ {P}_{{α}_{n}}$

With this notation, any observable can be expanded as $O = {\sum }_{{α}_{_}} {O}_{{α}_{_}} {P}_{{α}_{_}}$ where *O_{α}* is a rank *n* tensor of real numbers (since we assume that *O* is Hermitian).

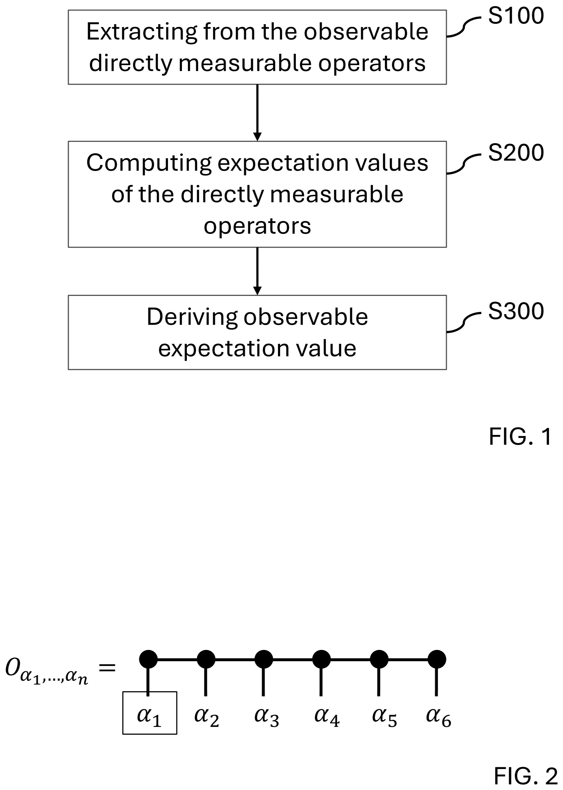

In principle, one needs 4*ⁿ* real numbers to fully specify an arbitrary observable *O*. In the following, the coefficients *O_{α}* are assumed to be given in terms of an efficiently contractible tensor network. For example, an MPS as shown in **FIG. 2****.** The MPS may be of finite bond dimension.

Observables of this form can arise, for example in various NISQ protocols, such as the tensor-network error mitigation protocol.

The present disclosure provides a method for decomposing the TN *O_{α}* into a sum of C directly measurable tensor networks (as defined hereinbelow). The term "decomposing" may refer to representing the TN or observable as a sum of components, while "extracting" may pertain to selecting specific terms from this sum. The decomposition may be configured to allow efficient measurement of the quantum observable. For example, C may be such that the measurement process can be performed in a reasonable amount of time (not exceeding a few hours e.g. 0.5 to 2 hours), or C may be bounded by a maximal measurement budget threshold. The decomposition may be iterative and involve a greedy approach. The term greedy approach may involve locally optimal choices at each iteration. ${O}_{{α}_{_}} \approx {O}_{{α}_{_}}^{\left(1\right)} + {O}_{{α}_{_}}^{\left(2\right)} + ⋯ + {O}_{{α}_{_}}^{\left(C\right)}$

Which induces a decomposition of O into k directly measurable observables $O = {O}^{\left(1\right)} + {O}^{\left(2\right)} + ⋯ + {O}^{\left(C\right)} .$

The present disclosure further provides a method to estimate 〈*O*^{(*j*)}〉 *= Tr*(*ρO^{(j)}*) which provides in turn an estimation of $\left〈O\right〉 ∼ {\sum }_{j = 1}^{C} \left〈{O}^{\left(j\right)}\right〉$.

### Efficient tensor network representation

An efficient tensor network representation or "efficiently contractible tensor network" may refer to a tensor network that can be contracted either exactly or approximately using an algorithm that operates with polynomial complexity relative to the size of the tensor network. In the disclosure, the coefficients of the observable, when expressed in the Pauli basis, can be represented as an efficient tensor network so that a contraction of this tensor network can be performed using a polynomial algorithm. The efficient network representation may include, but is not limited to Matrix Product State (MPS), Tree Tensor Networks (TTN), Projected Entangled Pair States (PEPS). Unless explicitly stated otherwise, any description, method, or operation described herein with respect to a particular type of tensor network, such as a MPS, is intended to apply equally to other types of (efficient) tensor networks.

### Matrix Product State (MPS)

A MPS may refer to a representation format used to express the observable or its components (directly measurable operators). In particular, an observable encoded as a MPS may refer to a tensor network representation used to encode the coefficients *O_{α}* of the observable in the Pauli basis. The MPS represents the tensor *O_{α}* as a product of smaller local tensors connected through shared indices, referred to as bonds. Each local tensor may correspond to a qubit and have a physical index representing the qubit state and bond indices linking it to adjacent tensors. The dimension of the bond indices, also known as bond dimension, may for example be smaller than 500, or smaller than 100.

### Directly measurable observable (operator)

An observable O, defined on n qubits may be referred to as directly measurable if there is a set of n single-qubit rotations (*U*₁ ... *Uₙ*) such that the operator $\hat{O} = \left({U}_{1}⊗…⊗{U}_{n}\right) O \left({U}_{1}^{†}⊗…⊗{U}_{n}^{†}\right)$ is diagonal in the computational basis (the Z basis). More specifically, for every computational basis element |*s*〉 # |*s*'〉, where s = (*s*₁ ... *sₙ*)*, sᵢ* ∈ {0,1}, 〈*s*|*Ô*|*s*'〉 = 0.

It is submitted that if O is a directly measurable observable and if for every product state |*ψ*〉 = |*ψ*₁〉 ⊗ ... ⊗ |*ψₙ*〉*,* there exists an efficient classical way to calculate 〈*ψ*|*O*|*ψ*〉, then the expectation value of O under quantum state ρ can be efficiently evaluated by a quantum computer given M copies of ρ.

Indeed, for estimating 〈*O*〉 *= Tr*(*ρO*)*,* given M copies of the quantum state prepared on a quantum computer, on each copy it is possible to act with ${U}_{1}^{†} ⊗ … ⊗ {U}_{n}^{†}$ to obtain the state $\hat{ρ} {=}^{def} \left({U}_{1}^{†}⊗…⊗{U}_{n}^{†}\right) ρ \left({U}_{1}⊗…⊗{U}_{n}\right)$

Since *Tr*(*ρ · O*) = *Tr*(*p̂ · Ô*)*,* our goal is to estimate the expectation value of *Ô* on *ρ̂*. $Tr \left(\hat{ρ}⋅\hat{O}\right) = {\sum }_{{s}_{_}} \left〈{s}_{_}\right| \hat{ρ} ⋅ \hat{O} \left|{s}_{_}\right〉 = {\sum }_{{s}_{_}} \left〈{s}_{_}\right| \hat{ρ} \left|{s}_{_}\right〉 ⋅ \left〈{s}_{_}\right| \hat{O} \left|{s}_{_}\right〉$

Where the second equality follows from the assumption that *Ô* is diagonal in the computational basis. As 〈*s*|*ρ̂*|*s*〉 is the probability of measuring a string *s* in a computational basis measurement of *ρ̂,* it is possible to estimate *Tr*(*ρ̂ · Ô*) as follows: we transform all M copies of *ρ* to *ρ̂,* and measure them in the computational basis, obtaining M measurement results *s*₁ ... *s*_{M}. Then an unbiased estimation of *Tr*(*ρ̂ · Ô*) is $Tr \left(\hat{ρ}.\hat{O}\right) ∼ \frac{1}{M} {\sum }_{t = 1}^{M} \left〈{{s}_{t}}_{¯}\right| \hat{O} \left|{s}_{t}\right〉$

Finally, by assumption 〈*sₜ*|*Ô*|s*ₜ*〉 can be calculated efficiently. Indeed, if *sₜ =* (*s*₁ ... *sₙ*) then defining $\left|{ψ}_{i}\right〉 = {U}_{i}^{†} \left|{s}_{i}\right〉$, and |*ψₜ*〉 = |*ψ*₁〉 ⊗ ... ⊗ |*ψₙ*〉, we get $\left〈{{s}_{t}}_{¯}\right| \hat{O} \left|{{s}_{t}}_{¯}\right〉 = \left〈{ψ}_{t}\right| \hat{O} \left|{ψ}_{t}\right〉 .$

### Directly measurable Tensor Network (TN)

Having defined a directly measurable observable, we now define a directly measurable TN as a tensor network *T* that encodes a tensor *O*_{*α*₁}...*_{αₙ}*, which represents a directly measurable observable O in the Pauli basis.

Therefore, if *O =* Σ*_{α} O*_{α} *P_{α}* is an observable and *O*_{α} is represented by an efficient TN *T* and if there exists a set of 4x4 rotations *Rᵢ, i* = 1,.., *n* of the form ${R}_{i} = \left(\begin{matrix}1 & 0 & 0 & 0 \\ 0 & & & \\ 0 & & {\hat{R}}_{i} & \\ 0 & & & \end{matrix}\right)$

Where *R̂ᵢ* is an orthogonal 3x3 matrix such that the tensor ${\hat{O}}_{{β}_{1} … {β}_{n}} = {\sum }_{{α}_{1} … {α}_{n}} {\left({R}_{1}\right)}_{{β}_{1} {α}_{1}} ⋅ … ⋅ {\left({R}_{n}\right)}_{{β}_{n} {α}_{n}} {O}_{{α}_{1} , … , {α}_{n}}$

is non-zero only when all *βᵢ* ∈ {0, 3}, then O is directly measurable and can be efficiently estimated on a quantum computer.

Indeed, every 4x4 rotation *Rᵢ* in the above form can be mapped to a local unitary rotation *Uᵢ* such that if *O* = Σ_{α} *O_{α} P_{α}* and *Ô = Σ_{β} Ô_{β} P̂_{β}* then $\hat{O} = \left({U}_{1}⊗…⊗{U}_{n}\right) o \left({U}_{1}^{†}⊗…⊗{U}_{N}^{†}\right)$ . Additionally, since by assumption, Ô_{*β*₁...*β*ₙ} ≠ 0 only when all *βᵢ* ∈ {0, 3}, it follows that *Ô* is made from a superposition of Pauli strings that are made only from the identity and Pauli Z and therefore, *Ô* is diagonal in the computational basis. Therefore, *O* is a directly measurable observable. Finally, since *O* is represented by an efficient TN, it follows that for every product state |*ψ*〉 = |*ψ*₁〉 ⊗ ... ⊗ |*ψₙ*〉, the quantity 〈*ψ*|*O*|*ψ*〉 can be estimated efficiently and therefore - as explained hereinabove - the expectation value of *O* can be estimated efficiently on a quantum computer.

In the present disclosure, a directly measurable operator may be a Hermitian operator and may therefore also be referred to as an observable when used in a measurement context.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**FIG. 1** is a box diagram generally describing embodiments of the present disclosure;
**FIG. 2****,** already described, illustrates a Matrix State Product tensor network;
**FIG. 3A-3C** illustrate tensor networks operations useful in the methods of the present disclosure;
**FIG. 4** illustrates a classical computing environment in which the disclosed technology may be implemented according to embodiments of the present disclosure;
**FIG. 5** illustrates system for implementing the disclosed technology according to embodiments of the present disclosure;
**FIGS. 6A-6B** are graphs illustrating entropy along cuts of MPS representations of operators in accordance with examples of applications of embodiments of the present disclosure;
**FIG. 7** is a graph illustrating relative error as a function of a number of measurable matrix product state operators in a decomposition in accordance with an example of application of embodiments of the present disclosure;
**FIGS. 8A-8F** illustrate comparative results for error as a function of a number of shots as obtained for a method according to the prior art and for embodiments of the present disclosure.

### DETAILED DESCRIPTION OF EMBODIMENTS

**FIG. 1** illustrates generally a computer implemented method for measuring an expectation value of an observable on a quantum computing device according to embodiments of the present disclosure. A tensor network representation *T* of the observable in the Pauli basis may be preliminarily obtained. The tensor network representation *T* may have an efficient contraction scheme i.e. it may be an efficient tensor network representation such as a MPS. In some embodiments, the tensor network representation *T* may either be available or be derived from a list of Pauli strings of said observable.

In a first step **S100,** the observable may be decomposed (partitioned) as a sum of one or more directly measurable operators. Step **S100** may include extracting from the tensor network representation of the observable the sum of the one or more directly measurable operators. Each directly measurable operator may be such that after applying a local qubit rotation at each qubit site, said directly measurable operator is diagonal in a Z basis, and may be represented by an efficient tensor network. The description provides more details below as to how the directly measurable operators may be determined. In a second step **S200,** for each directly measurable operator, an expectation value of said directly measurable operator is estimated using a finite number of measurements. The second step may comprise applying said local qubit rotations on the qubits of the quantum device and measuring said qubits in a computational basis to compute expectation values corresponding to each of said directly measurable operators. In a third step **S300,** the method may comprise combining the expectation values of said directly measurable operators to compute an approximation of the expectation value of the observable.

More details are provided hereinbelow on the details of the steps implemented on the method in embodiments of the present disclosure.

Given an observable *O* = Σ*_{α} O*_{α} *P_{α}*, where *O_{α}* is described by an efficient tensor network *T*, the present disclosure provides a method for decomposing T into a set of efficiently measurable tensor networks *T⁽¹⁾, T⁽²⁾*, ... that encode ${O}_{{α}_{_}}^{\left(1\right)} {O}_{{α}_{_}}^{\left(2\right)}$, ... such that ${O}_{{α}_{_}} \approx {O}_{{α}_{_}}^{\left(1\right)} + {O}_{{α}_{_}}^{\left(2\right)} + ⋯$

And the difference $Δ = {\left‖{O}_{{α}_{_}}-{\sum }_{k} {O}_{{α}_{_}}^{\left(k\right)}\right‖}_{2}$ is satisfactory (e.g. minimal or below a predefined threshold) for a given number (e.g. as small as possible) of terms in the decomposition. Such a decomposition induces a similar decomposition of the observable into a sum of directly measurable observables (also referred to as operators)$O = {O}^{\left(1\right)} + {O}^{\left(2\right)} + ⋯$

The difference Δ may be given in terms of the *L₂* norm which is defined by ${\left‖O\right‖}_{2} = \sqrt{{\sum }_{k} {\left|{O}_{{α}_{_}}\right|}^{2}}$

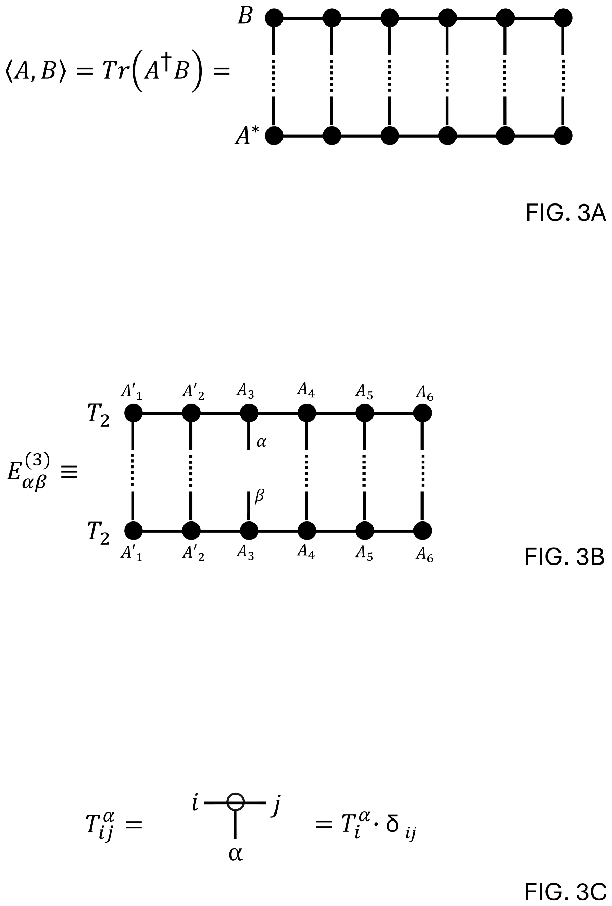

The *L₂* norm can be efficiently calculated in the TN framework. For example, as shown in **FIG. 3A**, the inner product *〈A, B*〉 of two MPSs A, B can be written as the contraction of a TN A* and B which can be efficiently calculated by contracting the TN horizontally from side to side.

The present disclosure provides hereinbelow two variants to achieve the decomposition. The first algorithm may produce a more optimal decomposition at the expense of having a higher computational cost than the second algorithm. The second algorithm may be computationally more efficient than the first algorithm but may be restricted to producing a decomposing in which the directly measurable TN are orthogonal to each other. Both algorithms rely on the basic subroutine described hereinbelow that takes a tensor network *T* and determines a directly measurable tensor network *T'* having a large overlap with *T*.

### Basic subroutine: extracting a directly measurable TN from a general TN

Given an observable *O* = *Σ_{α} O_{α} P_{α}* with Pauli coefficients *O_{α}* that are described by an efficient tensor network *T,* the present subroutine provides a directly measurable TN *T'* that describes an operator $O ′ = {\sum }_{{α}_{_}} {O}_{{α}_{_}}^{′} {P}_{{α}_{_}}$ with a large overlap *Tr*(*O* · *O*') with *O* i.e. which is a satisfactory approximation of *O* according to a predefined criteria.

To build *O*', an ordering of the qubits *i* = 1, ... *n* may be defined. In some embodiments, for example when the underlying TN is an MPS, the ordering of the qubits can be chosen from left to right. In other embodiments, any other order may be defined.

If we note {*A*₁, *A*₂, *... , Aₙ*} the local tensors in *T* that correspond to qubits 1, 2..., n, then *T'* may be constructed iteratively in n steps from the tensor network *T* by gradually replacing every local tensor *Aᵢ* by a projected version of itself denoted by ${A}_{i}^{′}$. The process may include determining a sequence of intermediate tensor networks *Tᵢ*: $\begin{matrix}{T}_{0} = \left\{{A}_{1},{A}_{2},{A}_{3},…,{A}_{n}\right\} = T \\ {T}_{1} = \left\{{A}_{1}^{′},{A}_{2},{A}_{3},…,{A}_{n}\right\} \\ {T}_{2} = \left\{{A}_{1}^{′},{A}_{2}^{′},{A}_{3},…,{A}_{n}\right\} \\ ⋮ \\ {T}_{0} = \left\{{A}_{1}^{′},{A}_{2}^{′},{A}_{3}^{′},…,{A}_{n}^{′}\right\} = T ′\end{matrix}$ To update ${A}_{i} \to {A}_{i}^{′}$ at step i, a local environment of qubit *i* in the TN *T*_{*i*-1} may be determined. The local environment may be a contraction of two copies *T*_{*i*-1} along their free legs except for the two legs that correspond to the i-th place. This provides a 4x4 positive-semi-definite (PSD) matrix ${E}_{αβ}^{\left(i\right)}$ where *α*, *β* are the indices of the leg *i* in the two copies of *T*_{*i*-1}. **FIG. 3B** illustrates an example of a local environment ${E}_{αβ}^{\left(i\right)}$ in which *T*_{*i-*1} is a MPS and *i* = 3. By assumption, since *T*_{*i*-1} is an efficient TN, then ${E}_{αβ}^{\left(i\right)}$ can be efficiently calculated.

The projected version ${A}_{i}^{′}$, may be found by considering the family of 4x4 orthogonal rotations of the form ${R}_{i} = \left(\begin{matrix}1 & 0 & 0 & 0 \\ 0 & & & \\ 0 & & {\hat{R}}_{i} & \\ 0 & & & \end{matrix}\right)$ where *R̂ᵢ* is an orthogonal 3x3 matrix. Each such rotation may be equivalent to a physical unitary rotation on the i-th qubit. ${A}_{i}^{′}$ may be such that it first rotates the operator and then nullifies all non-Pauli Z contributions at the rotated frame by projecting the resultant operator by *Q̂* = |0〉〈0| + |3〉〈3|, which results in a directly measurable observable. ${A}_{i}^{′}$ may also be such that the *L₂* norm of the resultant TN is maximal. This may be done by minimizing $Tr \left({R}_{i}{E}^{\left(i\right)}{R}_{i}^{†}\hat{Q}\right)$ over all possible *Rᵢ* of the form referred to above.

By defining ${{E}^{˜}}_{αβ} = {R}_{i} {E}^{\left(i\right)} {R}_{i}^{†} , then Tr \left({R}_{i}{E}^{\left(i\right)}{R}_{i}^{†}\hat{Q}\right) = Tr \left({E}^{˜}\hat{Q}\right) = {{E}^{˜}}_{00} + {{E}^{˜}}_{33} .$

By construction, *Rᵢ* leaves *E*₀₀ invariant, i.e. ${{E}^{˜}}_{00} = {E}_{00}^{\left(i\right)}$. Therefore, the minimizing of $Tr \left({R}_{i}{E}^{\left(i\right)}{R}_{i}^{†}\hat{Q}\right)$ may be performed by determining the rotation *Rᵢ* that maximizes *Ẽ*₃₃. Also, if *E*^{(*i*)*,*3×3} denotes the 3x3 block of *E*^{(*i*)} that corresponds to the Pauli X, Y, Z coordinates (i.e. coordinates 1, 2, 3), then ${{E}^{˜}}_{00} = {\left({\hat{R}}_{i}{E}^{\left(i\right) , 3 \times 3}{\hat{R}}_{i}^{†}\right)}_{33}$, so the minimizing of $Tr \left({R}_{i}{E}^{\left(i\right)}{R}_{i}^{†}\hat{Q}\right)$ may be performed by determining a 3x3 rotation *R̂ᵢ* that maximizes ${\left({\hat{R}}_{i}{E}^{\left(i\right) , 3 \times 3}{\hat{R}}_{i}^{†}\right)}_{33}$. This may be done by determining a rotation *R̂ᵢ* that diagonalizes *E*^{(*i*)*,*3×3} and places the maximal eigenvalue at the third coordinate. In such case, ${\left({\hat{R}}_{i}{E}^{\left(i\right) , 3 \times 3}{\hat{R}}_{i}^{†}\right)}_{33}$ is equal to the maximal eigenvalue itself.

Therefore, to find ${A}_{i}^{′}$ from *Aᵢ*, the following steps may be performed:
(1) Computing a 4x4 environment matrix *E*^{(*i*)};
(2) Computing a 3x3 block matrix *E*^{(i),3×3} from *E*^{(*i*)};
(3) Computing *R̂ᵢ*, the orthogonal matrix that diagonalizes *E*^{(*i*)*,*3×3} and places the largest eigenvalue at the 3rd coordinate;
(4) Define *Rᵢ* from *R̂ᵢ* based on the block form referred to herein above and ${Q}_{i} = {R}_{i}^{†} \hat{Q} {R}_{i}$ ;
(5) Contract *Aᵢ* with *Qᵢ* along its free leg to obtain ${A}_{i}^{′}$

### General variant

Having defined the basic subroutine, the first variant for decomposing an observable into a sum of directly measurable observable is now presented in some embodiments of the present disclosure.

Assuming that *O* is the observable described by an efficient TN *T*. The method includes
(1) Applying the basic subroutine on *T* to obtain a first directly measurable observable *O*⁽¹⁾;
(2) Computing the TN that encodes the difference
$Δ {O}^{\left(1\right)} = O - {O}^{\left(1\right)}$

This may be performed by increasing a bond dimension in the TN and/or by using standard TN techniques to compress the bond dimension with some accuracy loss.
(3) Iterating step (1) on Δ*O*⁽¹⁾ to obtain the second directly measurable observable *O*⁽²⁾;
(4) Computing Δ*O*⁽²⁾ = Δ*O* - *O*⁽²⁾;
(5) Iterating step (1) on Δ*O*⁽²⁾ to obtain the third directly observable *O*⁽³⁾ and so on, wherein at the k-th step, *O*^{(*k*)} determined and used to define Δ*O*^{(*k*)} = Δ*O*^{(*k-*1)} *- O*^{(*k*)};
(6) Terminating the process when either the *L₂* norm of *O*^{(*k*)} is below a certain threshold or k is above a prescribed value.

### Orthogonal variant

The second variant for decomposing an observable into a sum of directly measurable observable is now presented in some embodiments of the present disclosure.

This variant provides for directly measurable operators which are orthogonal to each other. Advantageously, the variant does not lead to an increase in the bond dimension of the underlying TNs.

The method may comprise applying the basic subroutine to the initial tensor network *T* to obtain the first directly measurable tensor network *T*⁽¹⁾*.* At each step *i =* 1, ..., *n* of the basic subroutine, when *E*^{(*i*)*,*3×3} is diagonalized, the two remaining eigenvalues *λ_{X}, λ_{Y}* may be stored as two entries list (i.e. backtracking data). Each such entry may also contain the intermediate tensor network *T*_{*i*-1} and the rotations *R_{i,X} R_{i,Y}* that result from a concatenation of *Rᵢ* and rotation respectively aligning the two remaining eigenvalues *λ_{X}, λ_{Y}* to the Pauli Z axis i.e. that takes *X → Z* (for the *λ_{X}* entry) and Y → *Z* for the *λ_{Y}* entry.

The eigenvalues λ*_{X}*, *λ_{Y}* may contain an overlap of an alternative intermediate tensor network *Tᵢ* if these eigenvalues had been used instead of the largest eigenvalue of Z.

After the first directly measurable TN *T*⁽¹⁾ is found, the method may include identifying in the backtracking data an entry with the largest eigenvalue. This entry corresponds to a step *i* and an intermediate tensor network *T*_{*i*-1} with a choice of either *λ_{X}* or *λ_{Y}*.

The method may thereafter include starting the basic subroutine from this point by constructing *Tᵢ* from *T*_{*i-*1} by selecting the rotation *R*_{*i*,*X*} or *R*_{*i*,Y} that was stored in the list, which moves *λ_{X}* or *λ_{Y}* to the Z coordinate. This entry is then removed from the list and the basic subroutine continues all the way to step n. As in the first run, the backtracking data is updated at every step *i, i +* 1, ..., *n.* By the end of the subroutine, the second directly measurable TN is obtained, which is by construction orthogonal to the first one. The process is repeated until either the *L₂* norm of *O*^{(*k*)} is below a certain threshold or k is above a prescribed value.

### Additional embodiments

### Greedy order

A possible improvement of both variants may be to allow for a flexible ordering of the sites that the basic subroutine visits. Instead of processing the qubits using some prescribed order, we can choose the sites in a greedy fashion. This may be done as follows. Suppose we have visited the sites *i*₁*, i*₂*, ... , iₜ* in the algorithm. Then we choose the site *i*_{*t*+1} by first calculating the local environments of all the remaining sites, and for each site calculating the largest eigenvalue of the environment. We then choose the site with the highest eigenvalue.

### Sparse Pauli representation case

Both variants can also be used when O is not given as tensor network. In particular, the case in which O is given as a sparse list of N Pauli strings *α*⁽¹⁾*, α*^{(*2*)}*, ... , α*^{(*N*)} $O = {\sum }_{i = 1}^{N} {O}_{{{α}_{_}}^{\left(i\right)}} {P}_{{{α}_{_}}^{\left(i\right)}}$

The idea is that in such case, it is possible to encode *O* as a diagonal MPS and use the method according to the present disclosure on said diagonal MPS.

A diagonal MPS is an MPS that is made of local tensors ${T}_{ij}^{α}$ of the form as shown in **FIG. 3C****.**

Assuming the i-th Pauli string is ${{α}_{_}}^{\left(i\right)} = \left({α}_{1}^{\left(i\right)},{α}_{2}^{\left(i\right)},…,{α}_{n}^{\left(i\right)}\right)$. The MPS tensors may be defined as ${T}_{i}^{\left(1\right) {β}_{1}} , {T}_{ij}^{\left(2\right) {β}_{2}} , {T}_{ij}^{\left(3\right) {β}_{3}}$, ..., where ${T}_{i}^{\left(1\right) {β}_{1}} = \left\{\begin{matrix}{O}_{{{α}_{_}}^{\left(i\right)}} , & {β}_{1} = {α}_{1}^{\left(i\right)} \\ 0 , & otherwise\end{matrix}\right.$

And ${T}_{ij}^{\left(l\right) {β}_{l}} = \left\{\begin{matrix}1 , i = j and {β}_{l} = {α}_{l}^{\left(i\right)} \\ 0 , otherwise\end{matrix}\right.$

In such case, the number of non-zero entries in an MPS tensor is exactly N. So overall, only l.N numbers are needed to store the MPS.

### Error analysis

In some embodiments, the method may further include a step of estimating an error in the estimation of the expectation value 〈*O*〉 *= Tr*(*ρO*)*.*

As detailed hereinabove, the present disclosure provides a decomposition of *O* into a set of C directly measurable observables $O = {\sum }_{c = 1}^{C} {O}^{\left(c\right)} + {O}^{\left(res\right)}$

Where *O*^{(*res*)} is the residual operator. Then for each directly measurable operator, an expectation value 〈*O*^{(*c*)}〉 = *Tr*(*ρO*^{(*c*)}) may be estimated using a given finite number of measurements. Consequently, there are two sources of error in the estimation of 〈*O*〉:
1. A residual error *εᵣₑₛ* = |*Tr(ρO*^{(*res*)})|
2. A statistical error ${ϵ}_{stat}^{\left(c\right)}$ in the estimation of every directly measurable operator *O*^{(*c*)} due to the finite number of samples used. Since all these statistical errors come from independent sampling experiments, a global statistical error is given by: ${ϵ}_{stat} = \sqrt{{\sum }_{c = 1}^{C} {\left({ϵ}_{stat}^{\left(c\right)}\right)}^{2}}$

By definition, *εᵣₑₛ* is a systematic error, whereas *εₛₜₐₜ* is a statistical error. An overall estimated error *ε* may be bounded ${ϵ}_{stat} \leq {ϵ}_{res} + {ϵ}_{stat}$

### Residual error estimation

By Cauchy-Schwartz, the following relation can be obtained ${ϵ}_{res} = \left|Tr\left({ρO}^{\left(res\right)}\right)\right| \leq \sqrt{Tr \left({ρ}^{2}\right)} ⋅ \sqrt{{\left({O}^{\left(res\right)}\right)}^{2}} \leq \sqrt{{\left({O}^{\left(res\right)}\right)}^{2}} = {\left‖{O}^{\left(res\right)}\right‖}_{2}$

In other words, the residual error is bounded by the operator *L₂* norm (also referred to as Frobenius norm or Hilbert-Schmidt norm) of the residual operator. It is noteworthy that in the second variant, this can be estimated directly from the decomposition algorithm since the different *O*^{(*c*)} are orthogonal to each other as well as with *O*^{(*res*)}*.* Therefore, ${\left‖O\right‖}_{2}^{2} = {\sum }_{c = 1}^{C} {\left‖{O}^{\left(c\right)}\right‖}_{2}^{2} + {\left‖{O}^{\left(res\right)}\right‖}_{2}^{2} = > {\left‖{O}^{\left(res\right)}\right‖}_{2} = \sqrt{{\left‖O\right‖}_{2}^{2} - {\sum }_{c = 1}^{C} {\left‖{O}^{\left(c\right)}\right‖}_{2}^{2}}$

### Statistical error estimation

In the present disclosure, the expectation value of the observable *O* is estimated by: $\left〈O\right〉 ∼ {\sum }_{c = 1}^{C} \left〈{O}^{\left(c\right)}\right〉$

The statistical error is therefore given by ${ϵ}_{stat} = \sqrt{Var \left(O\right)} = \sqrt{{\sum }_{c} Var \left({O}^{\left(c\right)}\right)}$, which follows from the fact that every *O*^{(*c*)} is calculated using independent sets of measurements. If the variance of a single measurement of *O*^{(*c*)} is denoted ${σ}_{c}^{2}$, and the estimation of the expectation value of the directly measurable operators are made with *M_{c}* measurements, we get: $Var \left({O}^{\left(c\right)}\right) = \frac{1}{{M}_{c}} {σ}_{c}^{2}$

If the total number of measurements M is constrained by a total budget of $M = {\sum }_{c = 1}^{C} {M}_{c}$ , then to get a minimal *Var*(*O*)*,* the number of measurements for estimating the expectation value of a directly measurable operator should preferably be ${M}_{c} = M ⋅ \frac{{σ}_{c}}{{\sum }_{c ′ = 1}^{C} {σ}_{c ′}}$

This results in $Var \left(O\right) = \frac{1}{M} {\left({\sum }_{c} {σ}_{c}\right)}^{2} = > {ϵ}_{stat} = \sqrt{\left(Var\left(O\right)\right)} = \frac{1}{\sqrt{M}} {\sum }_{c} {σ}_{c}$

In practice, *σ_{c}* depends on both *ρ* and *O*^{(*c*)} and can be determined empirically using a small fixed number of measurements.

### Use case: Hybrid classical-quantum computation with TN based backpropagation

The methods of the present disclosure may be useful in hybrid classical-quantum computation with TN based back propagation. The methods may enable to extend a depth of circuits that can be run by splitting the workload between a classical computer and a quantum computer.

Considering a quantum circuit *C* = Π*ᵢ Uᵢ* where each *Uᵢ* is unitary, acting on an initial state of n qubits |0〉^{⊗*n*} where we want to measure an observable *O* at the end of the circuit.

We can compute: $\left({\left〈O\right|}^{⊗ n}\right) ⋅ \left({\prod }_{i = T - 1}^{0} {U}_{i}^{†} O {\prod }_{i = 0}^{T - 1} {U}_{i}\right) ⋅ \left({\left|0\right〉}^{⊗ n}\right)$

Equivalently if we define the backpropagated operator in the Heisenberg picture $O \left(T-t\right) = {\prod }_{i = T - 1}^{t} {U}_{i}^{†} O {\prod }_{i = 0}^{T - 1} {U}_{i}$

And the forward propagated state $\left|ψ\left(t\right)\right〉 = {\prod }_{i = 0}^{t - 1} {U}_{i} \left({\left|0\right〉}^{⊗ n}\right)$

We can write ${\left〈O\right〉}_{C} = \left〈ψ\left(t\right)\right| O \left(T-t\right) \left|ψ\left(t\right)\right〉$

When *O*(*T - t*) can be represented as an efficient tensor network in the Pauli representation, the decomposition algorithms described herein may be applied in order to measure *O*(*T - t*) after preparing |*ψ*(*t*)〉 on the QPU. This reduces the depth of circuit needed to be run on the QPU and extends the total depth of circuits for which 〈*O*〉*_{C}* can be evaluated with a given fidelity.

As a concrete example, a circuit realizing a Floquet-like time evolution with the kicked-Ising model Hamiltonian may be defined as: $C = {\left({U}_{ZZ}{U}_{X}\right)}^{T} , {U}_{ZZ} = {\prod }_{\left(i, j\right)} {R}_{{Z}_{i} , {Z}_{j}} \left({θ}_{ZZ}\right) , {U}_{X} = {\prod }_{i} {R}_{{X}_{i}} \left({θ}_{x}\right)$

Where (i, j) runs over nearest neighbour pairs of a graph. In particular, a 1d chain may be considered.

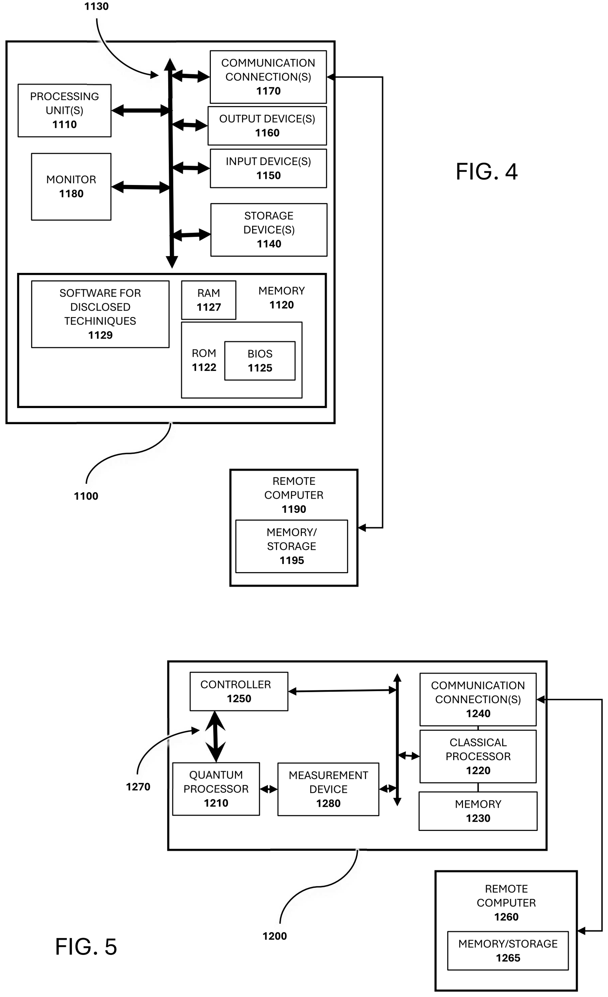

**FIG. 4** and the following discussion are intended to provide a brief, general description of an exemplary computing environment in which the disclosed technology may be implemented. Although not required, the disclosed technology is described in the general context of computer executable instructions, such as program modules, being executed by a personal computer (PC). Generally, program modules include routines, programs, objects, components, data structures, etc., that perform particular tasks or implement particular abstract data types. Moreover, the disclosed technology may be implemented with other computer system configurations, including handheld devices, multiprocessor systems, microprocessor-based or programmable consumer electronics, network PCs, minicomputers, mainframe computers, and the like. The disclosed technology may also be practiced in distributed computing environments where tasks are performed by remote processing devices that are linked through a communications network. In a distributed computing environment, program modules may be located in both local and remote memory storage devices.

With reference to **FIG. 4****,** an exemplary system for implementing the disclosed technology includes a general purpose (classical) computing device in the form of an exemplary conventional PC **1100,** including one or more processing units **1110,** a system memory **1120,** and a system bus **1130** that couples various system components including the system memory **1120** to the one or more processing units **1110.** The system bus **1130** may be any of several types of bus structures including a memory bus or memory controller, a peripheral bus, and/or a local bus using any of a variety of bus architectures. The exemplary system memory **1120** includes read only memory (ROM) **1122** and random access memory (RAM) **1127.** A basic input/output system (BIOS) **1125,** containing the basic routines that help with the transfer of information between elements within the PC **1100,** is stored in ROM **1122.** As shown in **FIG. 4****,** the system memory **1120** stores computer-executable instructions for performing any of the disclosed techniques (e.g., extracting from the observable a sum of one or more directly measurable operators, sending instructions to quantum computer for measuring the qubits, combining the expectation values of the directly measurable operators to compute an approximation of the expectation value of the observable, etc.) in respective memory portions (shown generally as executable software **1129** for performing any embodiment of the disclosed techniques)).

The exemplary PC **1100** further includes one or more storage devices **1140,** such as a hard disk drive for reading from and writing to a hard disk, a magnetic disk drive for reading from or writing to a removable magnetic disk, and/or an optical disk drive for reading from or writing to a removable optical disk (such as a CD-ROM or other optical media). Such storage devices can be connected to the system bus **1130** by a hard disk drive interface, a magnetic disk drive interface, and/or an optical drive interface, respectively. The drives and their associated computer readable media provide nonvolatile storage of computer-readable instructions, data structures, program modules, and other data for the PC **1100.** Other types of computer-readable media which can store data that is accessible by a PC, such as magnetic cassettes, flash memory, digital video disks, CDs, DVDs, RAMs, NVRAMs, ROMs, and the like, may also be used in the exemplary operating environment. As used herein, the terms storage, memory, and computer-readable media do not include or encompass propagating carrier waves or signals per se.

A number of program modules may be stored in the storage devices **1140,** including an operating system, one or more application programs, other program modules, and program data. Storage of results of quantum measurements and instructions for obtaining such measurements (and/or instructions for performing any embodiment of the disclosed technology) can be stored in the storage devices **1140.** A user may enter commands and information into the PC **1100** through one or more input devices **1150** such as a keyboard and a pointing device such as a mouse. Other input devices may include a digital camera, microphone, joystick, game pad, satellite dish, scanner, or the like. These and other input devices are often connected to the one or more processing units **1110** through a serial port interface that is coupled to the system bus **1130,** but may be connected by other interfaces such as a parallel port, game port, or universal serial bus (USB). A monitor **1180** or other type of display device is also connected to the system bus **1130** via an interface, such as a video adapter. Other peripheral output devices **1160,** such as speakers and printers (not shown), may be included. In some cases, a user interface is displayed so that a user can input a circuit for synthesis, and verify successful synthesis.

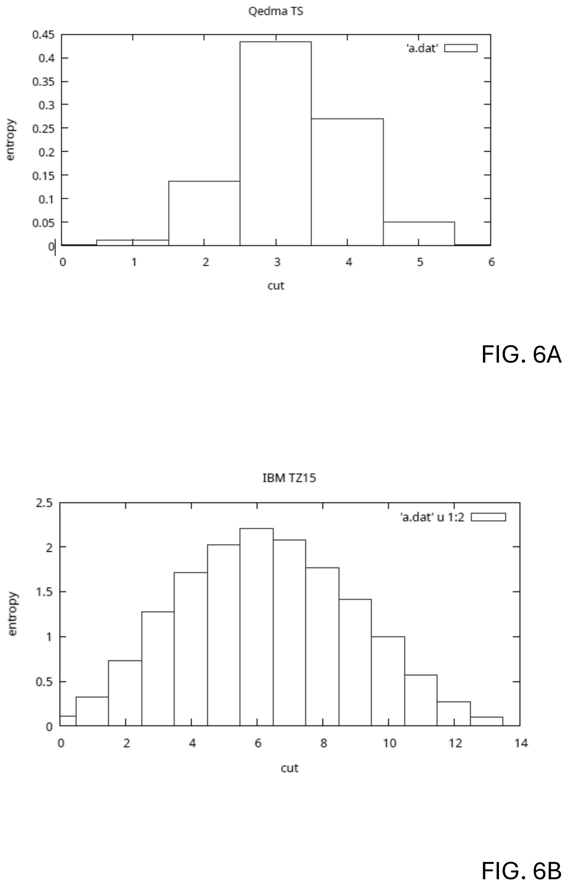

The PC **1100** may operate in a networked environment using logical connections to one or more remote computers, such as a remote computer **1190.** In some examples, one or more network or communication connections **1170** are included. The remote computer **1190** may be another PC, a server, a router, a network PC, or a peer device or other common network node, and typically includes many or all of the elements described above relative to the PC **1100,** although only a memory storage device **1195** has been illustrated in **FIG. 6****.** The personal computer **1100** and/or the remote computer **1190** can be connected to a logical a local area network (LAN) and a wide area network (WAN). Such networking environments are commonplace in offices, enterprise wide computer networks, intranets, and the Internet.

When used in a LAN networking environment, the PC **1100** is connected to the LAN through a network interface. When used in a WAN networking environment, the PC **1100** typically includes a modem or other means for establishing communications over the WAN, such as the Internet. In a networked environment, program modules depicted relative to the personal computer **1100,** or portions thereof, may be stored in the remote memory storage device or other locations on the LAN or WAN. The network connections shown are exemplary, and other means of establishing a communications link between the computers may be used.

With reference to **FIG. 5****,** an exemplary system for implementing the disclosed technology includes computing environment **1200,** The environment includes one or more quantum processing unit(s) **1210** including one or more monitoring/measuring device(s) **1280.** The quantum processing unit(s) execute quantum circuits that are provided by a classical processing unit **1220.** The quantum circuits are downloaded into or used to program or configure the quantum processing unit(s) **1210** (e.g., via control lines (quantum bus) **1270).** Procedures according to any of the disclosed embodiments (e.g. a high-level description of the set of gate sequences to be applied to perform the presently disclosed technology) are stored in a memory **1230.**

With reference to **FIG. 5****,** the high-level description of a quantum software may be translated into sets of gates (e.g., a sequence of quantum circuits). Such high-level descriptions may be stored, as the case may be, on one or more external computers **1260** outside the computing environment **1200** utilizing one or more memory and/or storage device(s) **1265,** then downloaded as necessary into the computing environment **1200** via one or more communication connection(s) **1240.** Quantum circuits (according to any of the disclosed embodiments) are coupled to the quantum processor **1210.**

The quantum processing unit(s) can be one or more of, but are not limited to: (a) a superconducting quantum computer; (b) an ion trap quantum computer; or (c) a topological quantum computer using e.g. Majorana zero modes. The sets of gates (e.g., using any of the disclosed embodiments) can be sent into (or otherwise applied to) the quantum processing unit(s) via control lines **1270** at a controller **1250** of the classical processor **1220.** In the illustrated example, the desired quantum computing process is implemented with the aid of one or more controllers **1250** that are specially adapted to control a corresponding one of the quantum processor(s) **1210.** The classical processor **1220** can further interact with measuring/monitoring devices (e.g., readout devices) **1280** to help control and implement the desired quantum computing process (e.g., by reading or measuring out data results from the quantum processing units once available, etc.). The classical processor may include any relevant functionality described with reference to the classical computing system of **FIG. 4****.**

### Comparison with an existing protocol

In this section, a comparative measurement approach is described, corresponding to an existing method for measuring a tensor network observable. The method is outlined in S. Filippov et al., *"Scalable tensor-network error mitigation for near-term quantum computing"* and L. E. Fischer et al. *"Dynamical simulations of many-body quantum chaos on a quantum computer"* as part of a tensor network error mitigation framework.

The method uses informationally complete measurements in the Pauli basis to obtain a decomposition of an MPS observable. The decomposition is probabilistic and is defined by a fixed set of probability distributions {*pᵢ*(ξ)}*ᵢ*, where *i* = 1,2, ... , *n* denotes a qubit index and *ξ* ∈ {1,2,3} corresponds to measurement in the Pauli *X, Y, Z* bases, respectively. The probability distributions *pᵢ*(ξ) are intended to describe the probability that the observable is supported by a given Pauli operator *P*_{ξ} at qubit site *i*.

As an example, for a TEM observable corresponding to an ideal Pauli X operator at qubit site i = 12, the probability distributions may be chosen as ${p}_{i} \left(ξ\right) = \frac{1}{3} for i \neq 12$ ${p}_{12} \left(ξ\right) = \left\{\begin{matrix}0.8 , & ξ = 1 \\ 0.1 , & ξ = 2 , 3\end{matrix}\right.$

Given these probability distributions, a Pauli based informationally complete measurement is defined at qubit **i** by measurement operators 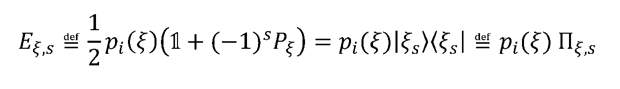 where *s* ∈ {0,1}, and |*ξ*₀〉, |*ξ*₁〉 are the +1 and -1 eigenvectors of the Pauli *P*_{ξ} and Π_{ξ,*s*} = |ξ*ₛ*〉〈ξ*ₛ*|. Physically, a measurement according to this POVM can be implemented by first selecting a Pauli basis according to *pᵢ*(*ξ*) and then measuring in its eigenbasis.

Mathematically, the single-qubit IC-POVMs can be tensored to give a IC-POVM of the entire system with 6*ⁿ* possible outcomes: ${E}_{{ξ}_{_} , {s}_{_}} = {E}_{{ξ}_{1} , {s}_{1}} ⊗ {E}_{{ξ}_{2} , {s}_{2}} ⊗ … ⊗ {E}_{{ξ}_{n} , {s}_{n}}$

To keep the notation tight, let us denote the 6-outcomes index (*ξᵢ*, *sᵢ*) by *tᵢ* and let *t = (t*₁*, t*₂*,* ... , *tₙ*)*.* Our IC-POVM elements are then denoted by {*Eₜ*}*.*

Since these OPVM operators span the space of all n-qubits operator, the measurements probabilities *µ*(*t*) *= Tr*(*ρEₜ*) contain the full information of the underlying state *ρ,* and can be used to reconstruct it. This can be done using a *dual basis Dₜ,* which is co-orthogonal to the *Eₛ* elements with respect to the Hilbert-Schmidt inner product: $Tr \left({E}_{{t}_{_}}⋅{D}_{{t ′}_{¯}}\right) = {δ}_{{t}_{_} , {t ′}_{¯}}$

In such case, it is easy to verify that $μ \left({t}_{_}\right) = Tr \left({ρE}_{{t}_{_}}\right) ⇔ ρ = {\sum }_{{t}_{_}} μ \left({t}_{_}\right) {D}_{{t}_{_}}$

There are many different dual bases for a given IC-POVM. In the method, the canonical dual basis is used

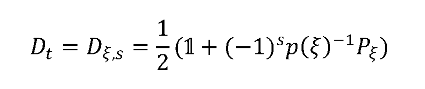

Given the decomposition of *ρ* using the dual basis, and an observable O that we
wish to measure, we may write $\left〈O\right〉 = Tr \left(ρO\right) = {\sum }_{{t}_{_}} μ \left({t}_{_}\right) Tr \left({OD}_{{t}_{_}}\right) {=}^{def} {\sum }_{{t}_{_}} μ \left({t}_{_}\right) {O}_{{t}_{_}}$

When *O* is given as a PTM MPS, it is easy to see that also *Oₜ* is given as a MPS with a physical leg dimension *d =* 6, which can be efficiently computed from the PTM MPS of*O*.

However, this is not a measureable MPS. To turn this expression into a sum of measureable MPSs we first separate the t = (*ξ*, *s*) summation into a summation over ξ and then over s. Then for *t* = (*ξ*, *s*), $μ \left({t}_{_}\right) = Tr \left({E}_{{t}_{1}}⊗{E}_{{t}_{n}}ρ\right) = {\prod }_{i} {p}_{i} \left({ξ}_{i}\right) Tr \left({Π}_{{ξ}_{1} , {s}_{1}}⊗{Π}_{{ξ}_{2} , {s}_{2}}⊗…⊗{Π}_{{ξ}_{n} , {s}_{n}}ρ\right)$

Substituting this in the formula of 〈*O*〉 and letting $p \left({ξ}_{_}\right) {=}^{def} {Π}_{i} {p}_{i} \left({ξ}_{i}\right)$ and ${O}_{{t}_{_}} {=}^{def} {O}_{{s}_{_}}^{\left(ξ\right)}$, we get $\left〈O\right〉 = {\sum }_{{ξ}_{_}} p \left({ξ}_{_}\right) {\sum }_{{s}_{_}} {O}_{{s}_{_}}^{\left({ξ}_{_}\right)} Tr \left({Π}_{{ξ}_{1} , {s}_{1}}⊗{Π}_{{ξ}_{2} , {s}_{2}}⊗…⊗{Π}_{{ξ}_{n} , {s}_{n}}ρ\right)$

This induces the following decomposition of O: $O = {\sum }_{{ξ}_{_}} p \left({ξ}_{_}\right) {\sum }_{{s}_{_}} {O}_{{s}_{_}}^{\left({ξ}_{_}\right)} ⋅ {Π}_{{ξ}_{1} , {s}_{1}} ⊗ {Π}_{{ξ}_{2} , {s}_{2}} ⊗ … ⊗ {Π}_{{ξ}_{n} , {s}_{n}} {=}^{def} {\sum }_{{ξ}_{_}} p \left({ξ}_{_}\right) {O}^{\left({ξ}_{_}\right)}$

Where *O*^{(ξ)} corresponds to the mMPS operator ${O}^{\left({ξ}_{_}\right)} = {\sum }_{{s}_{_}} {O}_{{s}_{_}}^{\left({ξ}_{_}\right)} ⋅ {Π}_{{ξ}_{1} , {s}_{1}} ⊗ {Π}_{{ξ}_{2} , {s}_{2}} ⊗ … ⊗ {Π}_{{ξ}_{n} , {s}_{n}}$

The decomposition *O* = Σ_{ξ}*p*(*ξ*)*O*^{(ξ)} may be considered a decomposition of O into mMPSs.

Ideally, if we have a budget of M shots, we would sample M vectors ξᵢ according to *p*(ξ), and approximate $O ∼ \frac{1}{M} {\sum }_{i = 1}^{M} {O}^{\left({{ξ}_{_}}_{i}\right)}$

With each *O*^{(ξ)} measured using a single shot. Practically however, every ξ requires a distinct quantum circuit for its measurement. We are therefore limited by the number of different ξ that we can use. So instead we use C vectors ξ₁, ... ., ξ*_{C}* and use M/C shots to sample *O*^{(ξ*i*)}: $\left〈O\right〉 ∼ \frac{1}{C} {\sum }_{i = c}^{C} \left〈{O}^{\left({{ξ}_{_}}_{c}\right)}\right〉$

Once we picked ξ⁽¹⁾, ..., ξ^{(C)}, the error in the estimation of 〈*O*〉 comes from two sources:
1. Residual error ${ϵ}_{res} = \left|\left〈O\right〉-\frac{1}{C}{\sum }_{i = c}^{C} \left〈{O}^{\left({{ξ}_{_}}_{c}\right)}\right〉\right|$
2. Statistical error *ε_{stat,c}* in the evaluation of each 〈*O*^{(ξ*c*)}〉

We can estimate the total error by $ϵ = \sqrt{{ϵ}_{res}^{2} + \frac{1}{{C}^{2}} {\sum }_{c} {ϵ}_{stat , c}^{2}}$

### Estimating the errors in the existing method

To estimate the residual error *εᵣₑₛ*, we look at 〈*O*^{(ξ)}〉 as a random variable that is sampled with probability *p*(*ξ*)*.* If ${σ}_{p}^{2}$ is its variance, then we estimate ${ϵ}_{res}^{2} = \frac{1}{C} {σ}_{p}^{2}$

To estimate *ε_{stat,c},* we let σ_{ξ*c*} be the variance of the mMPS observable *O*^{(*ξ*c)}. Then, as it is sampled using M/C samples, ${ϵ}_{stat , c}^{2} = \frac{1}{M / C} {σ}_{{{ξ}_{_}}_{c}}^{2}$

All together, $ϵ = \sqrt{\frac{1}{C} {σ}_{p}^{2} + \frac{1}{MC} {\sum }_{c} {σ}_{{{ξ}_{_}}_{c}}^{2}}$

Defining the average branch variance by ${σ}_{{ξ}_{_}}^{2} = \frac{1}{C} {\sum }_{c} {σ}_{{{ξ}_{_}}_{c}}^{2}$

We get the following estimate for the error in the existing method: $ϵ = \sqrt{\frac{1}{C} {σ}_{p}^{2} + \frac{1}{M} {σ}_{{ξ}_{_}}^{2}}$

### Numerical experiments

The following examples illustrate the application of the methods described herein to representative quantum circuits and operators. The examples are provided for explanatory purposes and do not limit the scope of the disclosure.

### Example 1: Gate error mitigation experiment with eight qubits

In one illustrative example, the disclosed methods were evaluated in connection with a gate error mitigation workflow executed for a quantum circuit acting on 8 qubits and comprising 304 quantum gates. The circuit was executed under a gate noise model. A bare observable corresponding to a Pauli Y operator acting on qubit 4, denoted Y₄, was selected as the target observable whose expectation value was to be estimated.

A gate error mitigation procedure was applied using a mitigation parameter χ = 150. The overall running time of the gate error mitigation workflow in this example was 6 minutes and 33 seconds. The resulting expectation values for the target observable were as follows: an ideal reference value 〈O*〉_{ideal}* = 0.138759, a noisy value obtained under the gate noise model 〈O〉_{noisy} = 0.0548014, and a mitigated value obtained after applying the gate error mitigation procedure 〈O〉_{GEM} = 0.138758. In this example, a total weight was computed for the mitigation process as ${\sum }_{{α}_{_}} {Q}_{{α}_{_}}^{2} = 2.83366$.

**FIG. 6A** illustrates entropy along cuts of a matrix product state representation of the relevant operator derived from the circuit. The horizontal axis corresponds to a cut index, and the vertical axis corresponds to an entropy value. The plotted values indicate that the entropy varies across different cuts, with higher entropy across some cuts and lower entropy across other cuts.

For reference, a vanilla decomposition was performed without applying local qubit rotations. In this example, the following basis elements were obtained, together with their probabilities and accumulated probabilities:
B[0] Prob = 0.995035 (acc 0.995035): Z*,Z*,Z*,Z*,Y*,Z*,X*,Z*
B[1] Prob = 0.00296305 (acc 0.997998): Z*,Z*,Z*,Z*,X,Z*,Z*,X*
B[2] Prob = 0.000849519 (acc 0.998847): Z*,Z*,Z*,Y,X*,Z*,Z*,Y*
B[3] Prob = 0.000693112 (acc 0.99954): Z*,Z*,Z*,Z*,Z,Z*,X*,X*

A locally rotated decomposition was also performed, in which local qubit rotations are applied so that extracted directly measurable operators become diagonal in the computational basis prior to measurement. In this example, the decomposition yielded the following basis elements, together with their probabilities and accumulated probabilities:
B[0] Prob = 0.995644 (acc 0.995644): Z*,Z*,Z*,Z*,Z*,Z*,Z*,Z*
B[1] Prob = 0.00386082 (acc 0.999504): Z*,Z*,Z*,Z*,Y,Z*,Z*,Z*

The locally rotated decomposition shifts weight toward basis elements that are closer to the computational basis, which in turn reduces the number of distinct measurement bases used to estimate the expectation value.

### Example 2: Gate error mitigation experiment with Oiskit^{™} Trotter circuit over 15 qubits

In one illustrative example, the disclosed methods were evaluated in connection with a gate error mitigation workflow for a Qiskit^{™} Trotter circuit over 15 qubits implementing a 2-local Hamiltonian. The circuit comprised two Trotter steps, each Trotter step comprising 68 gates. The circuit was executed under random Pauli noise. For single qubit gates, the noise rate was 10⁻³, and for two qubit gates, the noise rate was 10⁻². A bare observable corresponding to a Pauli Y operator acting on qubit 7, denoted Y₇, was selected as the target observable whose expectation value was to be estimated. The gate error mitigation workflow used a mitigation parameter χ = 230 and had a reported running time of 13 minutes and 40 seconds. A total weight for the mitigation combination was computed as ${\sum }_{{α}_{_}} {Q}_{{α}_{_}}^{2} = 6.6769$.

The resulting effective operator associated with the mitigation workflow was represented in the Pauli basis and encoded as an efficient tensor network, and entanglement entropies were computed along cuts in a matrix product state representation. **FIG. 6B** illustrates entropy as a function of cut, where each cut. The plotted profile indicates that the entanglement entropy varies across cuts and reaches a higher value in a central region of the register than at the ends, which is consistent with the circuit generating non uniform correlations across the qubit register.

For reference, a vanilla decomposition was performed without applying local qubit rotations. The first ten basis elements reported for the vanilla decomposition were:
B[0] P = 0.937959 (acc 0.937959): X*,X*,X*,X*,Z*,Y*,X*,Y*,X*,Z*,Y*,X*,X*,X*,Z*
B[1] P = 0.0164443 (acc 0.954403): X*,X*,X*,X*,Z*,Y*,X*,Z,Y*,Z*,Z*,X*,X*,Y*,Y*
B[2] P = 0.00542238 (acc 0.959826): X*,X*,X*,X*,Z*,Y*,Y,Z*,X*,Z*,X*,Z*,X*,Z*,Y*
B[3] P= 0.00331048 (acc 0.963136): X*,X*,X*,X*,Z*,Y*,X*,X,X*,Y*,Z*,X*,Z*,X*,Z*
B[4] P= 0.0032558 (acc 0.966392): X*,X*,X*,X*,Z*,Y*,X*,Y*,Y,Y*,Z*,X*,Z*,X*,Z*
B[5] P= 0.00272102 (acc 0.969113): X*,X*,X*,X*,Z*,Y*,X*,Z,X,Z*,X*,Z*,X*,Z*,Y*
B[6] P = 0.00215484 (acc 0.971268): X*,X*,X*,X*,Z*,Y*,Y,Y,X*,Y*,Z*,X*,Y*,Z*,X*
B[7] P = 0.00181354 (acc 0.973081): X*,X*,X*,X*,Z*,Y*,Y,X,X*,Y*,Z*,X*,Z*,X*,Z*
B[8] P = 0.00112763 (acc 0.974209): X*,X*,X*,X*,Z*,Y*,Z,Z*,X*,Z*,X*,Z*,X*,Z*,X*
B[9] P= 0.000986542 (acc 0.975195):X*,X*,X*,X*,Z*,Z,Y*,Z*,X*,X*,Z*,X*,Z*,X*,Z*

A reported cumulative quantity labeled Total Weight after 500 bases: 0.998782 was provided for the vanilla decomposition.

A locally rotated decomposition was also performed, in which local qubit rotations are applied so that extracted directly measurable operators are diagonal in the computational basis prior to measurement. The first ten basis elements reported for the locally rotated decomposition were:
B[0] Prob = 0.942891 (acc 0.942891): Z*,Z*,Z*,Z*,Z*,Z*,Z*,Z*,Z*,Z*,Z*,Z*,Z*,Z*,Z*
B[1] Prob = 0.020389 (acc 0.96328): Z*,Z*,Z*,Z*,Z*,Z*,Z*,Y,Z*,Z*,Z*,Z*,Z*,Z*,Z*
B[2] Prob = 0.00503415 (acc 0.968314): Z*,Z*,Z*,Z*,Z*,Z*,Z*,X,Z*,Z*,Z*,Z*,Z*,Z*,Z*
B[3] Prob = 0.00232325 (acc 0.970637): Z*,Z*,Z*,Z*,Z*,Z*,Z*,Y,Y,Z*,Z*,Z*,Z*,Z*,Z*
B[4] Prob = 0.00230142 (acc 0.972939): Z*,Z*,Z*,Z*,Z*,Z*,Y,Z*,Z*,Z*,Z*,Z*,Z*,Z*,Z*
B[5] Prob = 0.00188995 (acc 0.974829): Z*,Z*,Z*,Z*,Y,Z*,Z*,Z*,Z*,Z*,Z*,Z*,Z*,Z*,Z*
B[6] Prob = 0.00169919 (acc 0.976528): Z*,Z*,Z*,Z*,Z*,Z*,Z*,Z*,Y,Z*,Z*,Z*,Z*,Z*,Z*
B[7] Prob = 0.00161852 (acc 0.978147): Z*,Z*,Z*,Z*,Z*,Z*,X,Z*,Z*,Z*,Z*,Z*,Z*,Z*,Z*
B[8] Prob = 0.0015414 (acc 0.979688): Z*,Z*,Z*,Y,Z*,Z*,Z*,Z*,Z*,Z*,Z*,Z*,Z*,Z*,Z*
B[9] Prob = 0.00131211 (acc 0.981): Z*,Z*,Z*,X,Z*,Z*,Z*,Z*,Z*,Z*,Z*,Z*,Z*,Z*,Z*

A reported cumulative quantity labeled Total Weight after 257 bases: 0.999001 was provided for the locally rotated decomposition

### Example 3: Ising-Trotter circuit over 24 qubits

In one illustrative example, a resultant Gate Error Mitigated (GEM) observable and a resultant noisy quantum state *ρ*_{noisy} of a circuit simulating a 24 qubit Ising-Trotter experiment were simulated. A Pauli noise model was used, with parameter values representative of noise present on superconducting qubits such as Google^{™} superconducting qubits. The noisy state *ρ*_{noisy} was simulated using a MPS in a Pauli Transfer Matrix representation with *χ* = 2048. The GEM observable was calculated from a superoperator *M*⁻¹, where *M*⁻¹ was calculated using *χ* = 512. The bare observable was selected as *O = X*₁₂*,* corresponding to a Pauli *X* operator acting on qubit 12. The exact expectation value for this example was 〈*O*〉 = Tr(*ρ*_{exact}*O*) = 0.177694. Using the algorithm with locally rotated bases, *O* was decomposed into 70 measurable matrix product state (mMPS) operators *O*^{(*c*)} such that $O = {\sum }_{c = 1}^{70} {O}^{\left(c\right)}$. For each *O*^{(*c*)}, an expectation value 〈*O*^{(*c*)}〉 = Tr(*ρ*_{noisy}*O*^{(*c*)}) was calculated. A single measurement variance ${σ}_{c}^{2}$ for each *O*^{(*c*)} was estimated empirically using more than 100 samples. The first are given in the table below:

| Observable | 〈*O*^{(*c*)}〉 | ${σ}_{c}^{2}$ |
|---|---|---|
| *O*⁽¹⁾ | 0.202134 | 1.73124 |
| *O*⁽²⁾ | -0.014402 | 0.00536576 |
| *O*⁽³⁾ | -0.000994319 | 0.00118905 |
| *O*⁽⁴⁾ | -0.00485448 | 0.000979596 |
| *O*⁽⁵⁾ | 0.00159645 | 0.000458923 |
| *O*⁽⁶⁾ | 0.000269884 | 0.000427728 |
| *O*⁽⁷⁾ | 0.000500828 | 0.000249608 |
| *O*⁽⁸⁾ | -0.00124574 | 0.000207423 |
| *O*⁽⁹⁾ | 1.36383e-05 | 0.00018541 |
| *O*⁽¹⁰⁾ | -0.000421048 | 0.000167323 |

Using these quantities, a residual error and a statistical error were evaluated as functions of *C* and *M,* where *C* is the number of terms retained in the decomposition and *M* is a measurement budget. For a truncation that retains the first *C* operators *O*^{(*c*)}*,* the residual error was defined as ${ϵ}_{res} \left(C\right) = \left|\left〈O\right〉-{\sum }_{c = 1}^{C} \left〈{O}^{\left(c\right)}\right〉\right|$

The statistical error was evaluated according to ${ϵ}_{stat} = \frac{1}{\sqrt{M}} {\sum }_{c = 1}^{C} {σ}_{c}$

n this example, the residual error expression above was evaluated with respect to the noisy state *ρ*_{noisy}, which provides a tighter residual estimate than a bound expressed only in terms of an operator norm.

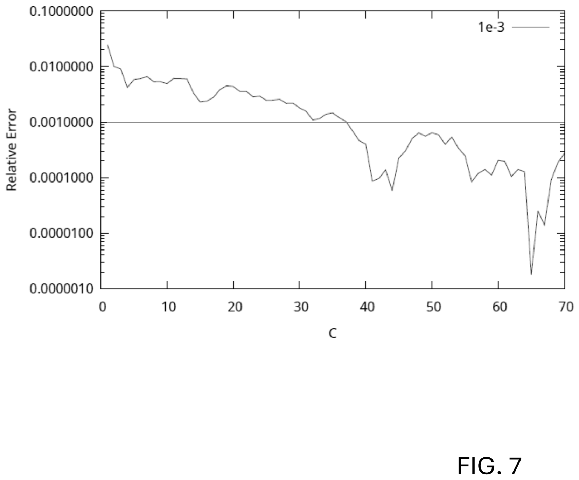

**FIG. 7** illustrates relative error as a function of *C,* where *C* is the number of measurable matrix product state operators retained from the decomposition of *O* = *X*₁₂ into 70 terms. The horizontal axis corresponds to *C* from 0 to 70, and the vertical axis corresponds to relative error on a logarithmic scale. A reference line at 10⁻³ is shown. The plotted curve decreases as *C* increases, indicating that including additional terms reduces the residual error. In this example, retaining fewer than *C* = 40 terms is sufficient to obtain a residual error smaller than 10⁻³.

It is noted that the quantity ${\sum }_{c = 1}^{C} {σ}_{c}$ changes only moderately as *C* increases, increasing from approximately 1.31 at *C* = 1 to approximately 1.71 at *C* = 70. Accordingly, a total error model for the disclosed protocol was approximated as $ϵ \left(C, M\right) = {ϵ}_{res} \left(C\right) + \frac{1.7}{\sqrt{M}}$

For comparison, an informationally complete decomposition protocol according to the prior art described above was also used to estimate 〈*O*〉. Using 1000 samples of *ξ*, an estimate ${σ}_{p}^{2} \approx 0.02$ is obtained and and using approximately 500 realizations of *ξ* with 1000 samples in each realization, a variance estimate ${σ}_{ξ}^{2} \approx 2.9$ was obtained. Substituting these values into the error expression for the informationally complete protocol yields an estimated error model ${ϵ}_{prior art} \left(C, M\right) ∼ \sqrt{\frac{0.02}{C} + \frac{2.9}{M}}$

The two error models coincide in the limit of large *C,* while for smaller *C* the error model for the protocol according to embodiments of the present disclosure indicates a smaller estimated error. Because the locally rotated decomposition in this example contains 70 terms, the disclosed protocol is plotted using *C* = 70 when the number of circuits for the informationally complete protocol exceeds 70.

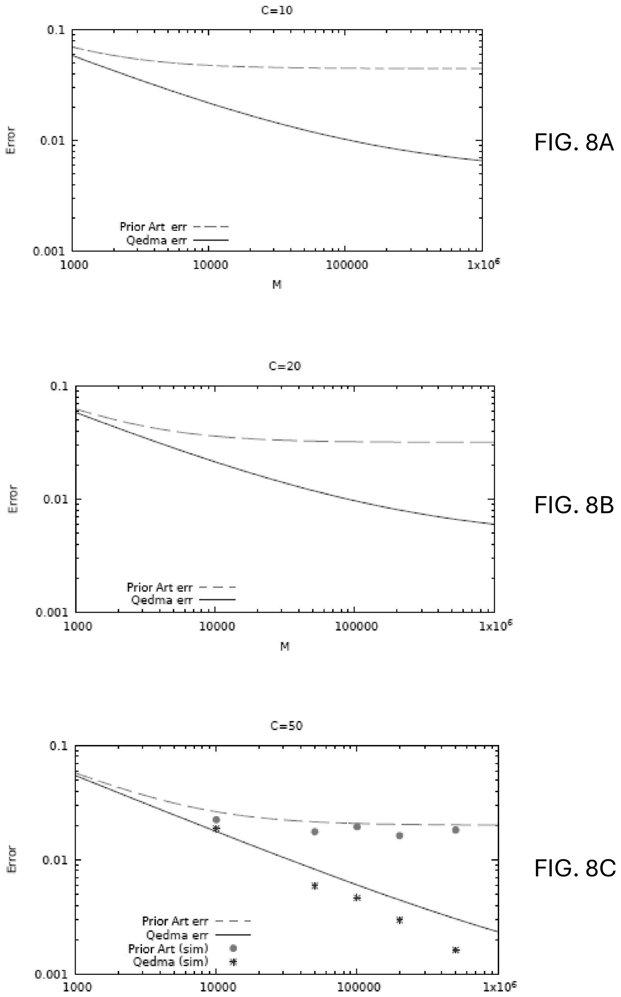

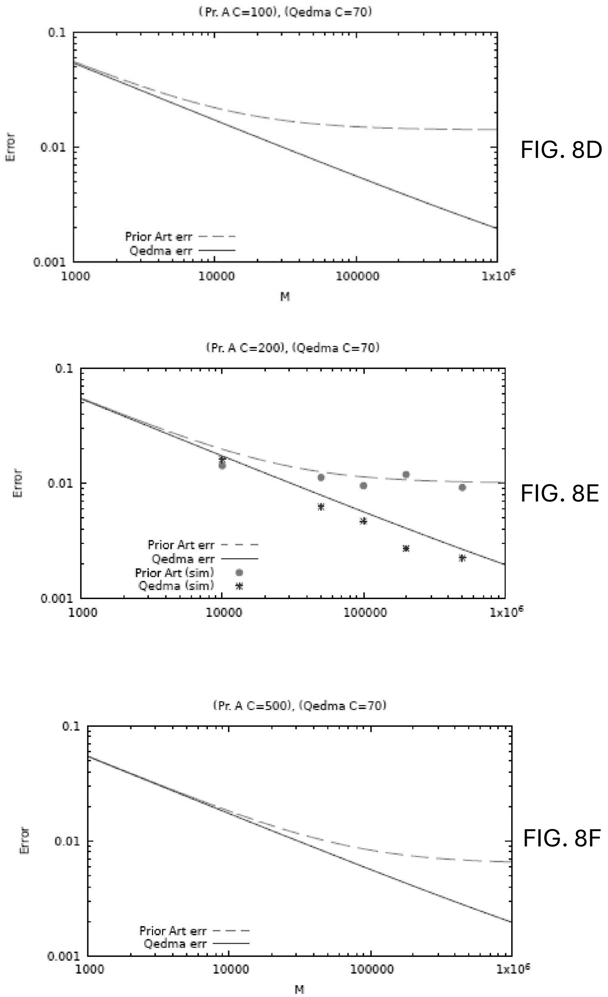

**FIGS. 8A-F** illustrate multiple plots of error as a function of *M,* where *M* is a measurement budget (shots). Each plot shows a curve corresponding to the error model according to the disclosed methods and a curve corresponding to the error model of the informationally complete protocol of the prior art. In **FIGS. 8C** and **8E****,** discrete markers represent direct measurement simulation results used to validate the error estimates. The plots illustrate the dependence of error on measurement budget and the effect of selecting different values of C for the prior art protocol and for the protocol according to the present disclosure. **FIGS. 8A-8C** show the error for the methods of the prior art and for the present disclosure for C=10, 20 and 50 respectively. **FIGS. 8D-8F** show the error for the prior art method and the present disclosure for C=100, 200 and 500 for the prior art method respectively and C=70 for the presently disclosed method for all three graphs.

Having described and illustrated the principles of the disclosed technology with reference to the illustrated embodiments, it will be recognized that the illustrated embodiments can be modified in arrangement and detail without departing from such principles. For instance, elements of the illustrated embodiments shown in software may be implemented in hardware and vice-versa. Also, the technologies from any example can be combined with the technologies described in any one or more of the other examples. It will be appreciated that procedures and functions such as those described with reference to the illustrated examples can be implemented in a single hardware or software module, or separate modules can be provided. The particular arrangements above are provided for convenient illustration, and other arrangements can be used.

## Claims

1. A computer implemented method for measuring on a quantum computing device an expectation value of an observable in a given quantum state, the method comprising:
**(a)** obtaining an efficient tensor network representation *T* of the observable in a Pauli basis;
**(b)** extracting from the observable a sum of one or more directly measurable operators, each directly measurable operator being:
**i)** such that after applying a local qubit rotation at each qubit site, said directly measurable operator is diagonal in a computational basis, and
**ii)** represented by an efficient tensor network;
**(c)** for each directly measurable operator, applying said local qubit rotations on the qubits of the quantum device and measuring said qubits in the computational basis to compute expectation values corresponding to each of said directly measurable operators;
**(d)** combining the expectation values of said directly measurable operators to compute an approximation of the expectation value of the observable.

2. The method of claim 1, wherein the one or more directly measurable operators are extracted iteratively by an iterative deterministic process using the tensor network representation T of the observable.

3. The method of claim 2, wherein said iterative deterministic process uses a greedy approach configured to maximize an operator norm of said one or more directly measurable operators at each step of said iterative deterministic process.

4. The method of any of the preceding claims, wherein the step of extracting from the observable a sum of one or more directly measurable operators comprises obtaining a tensor network representation *T⁽¹⁾* of a first directly measurable operator by an iterative process comprising sequentially processing each qubit *i* from *1* to *n* by contracting an intermediate tensor network *T*_{*i-*1} with a projector *Qᵢ* along the i-th leg of the tensor network *T*_{*i*-1} to form a subsequent intermediate tensor network *Tᵢ* such that a L₂ norm of said subsequent intermediate tensor network *Tᵢ* is maximal, wherein *T₀ = T* and *Tₙ* is the tensor network representation *T⁽¹⁾* of the first directly measurable operator.

5. The method of claim 4, wherein the projector *Qᵢ* is expressed as ${Q}_{i} = {R}_{i}^{- 1} \hat{Q} {R}_{i}$, where Q is a fixed rank-2 projector onto the Pauli coordinates {0, 3} corresponding to the identity and Z operators and the local rotation *Rᵢ* is a 4x4 orthogonal matrix on the Pauli coordinates such that the L₂ norm of the subsequent intermediate tensor network *Tᵢ* is maximal.

6. The method of claim 5, wherein said local rotation *Rᵢ* is computed from the intermediate tensor network *T*_{*i*-1} by:
**(a)** computing a local environment *E_{αβ}* of the i-th qubit,
**(b)** extracting a subspace local environment *Ê_{αβ}* from the local environment *E_{αβ}* corresponding to the Pauli X, Y, Z;
**(c)** computing a subspace rotation *R̂ᵢ* that diagonalizes the subspace local environment *Ê_{αβ}* and places a largest eigenvalue at the Pauli Z;
wherein the local rotation *Rᵢ* is a block-diagonal matrix incorporating *R̂ᵢ*.

7. The method according to any of the preceding claims, wherein tensor network representations *T^{(k)}* of remaining directly measurable operators, for *k* ≥ 2 are computed iteratively by:
**(a)** computing a residual tensor network Δ*Tₖ* substantially equal to a difference between a residual tensor network computed from a previous iteration Δ*T*_{*k-*1} and the tensor network representation *T*^{(*k-*1)} of the directly measurable operator determined in the previous iteration, wherein Δ*T*₁ *= T*;
**(b)** obtaining *T*^{(*k*)} by performing an iterative process comprising sequentially processing each qubit *i* from *1* to *n* by contracting an intermediate tensor network *T*_{*i*-1} with a projector *Qᵢ* along the i-th leg of the tensor network *T*_{*i-*1} to form a subsequent intermediate tensor network *Tᵢ* such that a L₂ norm of said subsequent intermediate tensor network *Tᵢ* is maximal, wherein *T₀ =* Δ*Tₖ* and *Tₙ* is the tensor network representation *T^{(k)}* of the k-th directly measurable operator
wherein said tensor network representations *T^{(k)}* of said remaining directly measurable operators are computed until one or more predefined criteria is met.

8. The method of claim 7, wherein the tensor network representations *T^{(k)}* of the remaining directly measurable operators, for k ≥ 2 are computed iteratively using a backtracking approach.

9. The method of claim 8, wherein the backtracking approach comprises:
(a) storing backtracking data during the calculation of T*⁽¹⁾*, the backtracking data including, for each value of i ranging from 1 to n, the intermediate tensor network representation T_{*i*-1}, the corresponding local rotation matrix *Rᵢ* and the two eigenvalues of the corresponding subspace local environment *Ê_{αβ}*;
**(b)** selecting a qubit location j for which one of backtracked eigenvalue is maximal;
**(c)** sequentially processing each qubit *i* from *j* to *n* by contracting an intermediate tensor network *T*_{*i*-1} with a projector *Qᵢ* along the i-th leg of the tensor network *T*_{*i*-1} to form a subsequent intermediate tensor network *Tᵢ* such that a L₂ norm of said subsequent intermediate tensor network *Tᵢ* is maximal, wherein the projector *Qⱼ* is derived from a concatenation of the rotation *Rⱼ* and a rotation aligning the maximal backtracked eigenvalue to the Pauli Z axis and *Tₙ* is the tensor network representation *T*^{(*2*)} of the second directly measurable operator;
**(d)** updating the backtracking data during the calculation of *T⁽²⁾*;
**(e)** iterating steps (b)-(d) until one or more predefined criteria is met.

10. The method of any of claims 4 to 9, wherein sequentially processing each qubit is performed in a greedy order.

11. The method of any of the preceding claims, wherein the efficient tensor network is a Matrix Product State, a Tree Tensor Network or a Projected Entangled Pair States.

12. The method of any of the preceding claims, wherein obtaining an efficient tensor network representation *T* of the observable in the Pauli basis includes receiving the efficient tensor network representation or mapping the efficient tensor network representation from a list of Pauli strings.

13. A hybrid classical-quantum computation method with tensor network based backpropagation using the method of any of the preceding claims.

14. A quantum error mitigation scheme using the method of any of the preceding claims.

15. A computer system configured to implement the method of any of the preceding claims.
